# EUROPÄISCHE PATENTANMELDUNG

(11) **EP 4 436 149 A1**
(43) Veröffentlichungstag der Anmeldung: **25.09.2024**
(21) Anmeldenummer: 24156119.0
(22) Anmeldetag: 06.02.2024
(51) Int. Cl.: H04M 1/18, G06F 1/16

(54) **EXPLOSIONSGESCHÜTZES ANZEIGE- UND EINGABESYSTEM**

(30) Priorität: 23.03.2023 DE 102023107340
(71) Anmelder: Wilhelm Niemann GmbH & Co KG, 49326 Melle-Neuenkirchen (DE)
(72) Erfinder: Niemann, Frank, 49326 Melle-Neuenkirchen (DE); Kepp, Arno, 41747 Viersen (DE)
(74) Vertreter: 2K Patentanwälte Blasberg Kewitz & Reichel

(57) **Zusammenfassung**

Explosionsgeschütztes Anzeige- und Eingabesystem ausgebildet zum Betrieb in einer explosionsgefährdeten Atmosphäre der Kategorie 2;
umfassend eine Anzeigeeinheit mit einen Bildschirm, der eine Touch-Oberfläche zur Eingabe von Befehlen aufweist und der Explosionsgeschützt ist und mit einer entfernt im nicht explosionsgefährdetem Bereich aufstellbar Transmitter-Einheit.

## Beschreibung

Die Erfindung betrifft ein explosionsgeschütztes Anzeige- und Eingabesystem ausgebildet zum Betrieb in einer explosionsgefährdeten Atmosphäre Kategorie 2 gem. ATEX-RL 2014/34/EU, in einer möglichen spezifischen Ausführungsform kann die Erfindung auch in einer Gas-Atmosphäre der Zone 1 / Kategorie 2 eingesetzt werden.

### Gebiet der Erfindung:

HMI (Human Machine Interface) werden im Bereich der Maschinensteuerung häufig eingesetzt. Diese umfassen in der Regel den gesamten Steuerrechner auch für die Maschine oder haben eine eigene Komplexe-Bearbeitungseinheit (Prozessor) zur Verarbeitung der Signale vom und zum Steuerrechner. In Bereichen die explosionsgefährdet sind, müssen solche bekannten HMIs aufwendig gesichert werden, häufig durch den Einsatz von großvolumigen mit Sand gefüllten Gehäusen.

DE 20 2018 101 412 U1 offenbart ein feuerbeständiges Display, das innenseitig wenigstens teilweise mit Sand gefüllt ist.

DE 203 19 489 U1 zeigt ein explosionsgeschütztes Display, mit Berührungsfeldern und das Display ist in einer Baugruppe integriert, wobei innerhalb des Ex-Gehäuses teleskopartige Anpresselemente angeordnet sind, die die Berührungsfelder und/oder Baugruppe an die Innenfläche des Sichtfensters pressen.

CN 2 10 467 077 U zeigt ein explosionsgeschütztes Display mit einer Dichtungsanordnung, die die Explosionsgefahr reduziert.

CN 2 08 623 809 U zeigt eine Ausbildung eines hdBaseT Transmitters.

CN 2 02 487 086 U zeigt ein explosionsgeschütztes Display das Kabellos angesteuert wird.

Überblick über die Erfindung:
Aufgabe der Erfindung ist die Bereitstellung eines schlanken einfachen HMIs, das einfacher zu schützen ist, damit es geeignet ist, in einer explosionsgefährdeten Atmosphäre vorzugsweise der Kategorie 2 verwendet zu werden. In einer möglichen spezifischen Ausführungsform kann die Erfindung auch in einer Gas-Atmosphäre der Zone 1 / Kategorie 2 eingesetzt werden.

Gelöst wird diese Aufgabe durch eine Vorrichtung nach den Ansprüchen.

Insbesondere wird die Aufgabe durch ein explosionsgeschütztes Anzeige- und Eingabesystem (HMI) ausgebildet zum Betrieb in einer explosionsgefährdeten Atmosphäre der Kategorie 2 gelöst, diese umfasst eine Anzeigeeinheit mit einem Bildschirm, der eine Touch-Oberfläche zur Eingabe von Befehlen aufweist. Zusätzlich umfasst die Anzeigeeinheit eine erste HDBaseT-Schnittstelle und elektronische Komponenten, die den Bildschirm und die HDBaseT-Schnittstelle kontrollieren. Die Anzeigeeinheit ist so ausgebildet, dass sie in einer explosionsgefährdeten Atmosphäre der Kategorie 2 aufgestellt werden darf.

Eine weitere Komponente ist eine entfernt im nicht explosionsgefährdetem Bereich aufstellbare Transmitter-Einheit. Diese Einheit muss nicht ausgebildet sein, um in einer explosionsgefährdeten Atmosphäre der Kategorie 2 aufgestellt zu werden.

Die Transmitter-Einheit umfasst eine Eingangs-Videoschnittstelle, eine zweite HDBaseT-Schnittstelle und eine USB-Schnittstelle. Die Transmitter-Einheit ist ausgebildet, um Bildschirm-Videosignale, die von einem Hostrechner z.B. einem Maschinensteuerrechner (SPS) eingespeist werden, umzuwandeln. Auch kann dieser Steuerrechner z.B. bestimmte HMI Standards bereitstellen wie Siemens WinCC ^{®}. Bei der Umwandlung werden Signale von der Eingangs-Videoschnittstelle umgewandelt, so dass sie über die zweite HDBaseT-Schnittelle und über ein Netzwerk an die erste HDBaseT-Schnittstelle der Anzeigeeinheit übertragen werden können. Durch die Umwandlung in ein Format, das eine Übertragung über ein Netzwerkkabel erlaubt, können größere Entfernungen überwunden werden, als mit einem Standard-Monitorkabel.

Damit diese Video-Signale, die über das Netzwerk übertragen werden, verarbeitet werden können, ist die Anzeigeeinheit ferner ausgebildet, um mit den elektronischen Komponenten die empfangenen Signale in Bildschirm-Videosignale zurückumzuwandeln. Nach der Umwandlung werden diese dann auf dem Bildschirm dargestellt. Damit allerdings auch eine Interaktion möglich ist, weist der Bildschirm eine Touch-Oberfläche auf. Die so erzeugten Touch-Eingabe-Signale werden von der Anzeigeeinheit umgewandelt, um über die erste HDBaseT-Schnittstelle an die zweite HDBaseT-Schnittstelle zur Transmitter-Einheit übertragen zu werden. Die Transmitter-Einheit ist ausgebildet, um die Eingabe-Signale über die USB-Schnittstelle an einen Hostrechner auszugeben, so dass diese als Standard-Signale für eine Touch-Oberfläche durch den Hostrechner interpretierbar sind.

Durch diesen Ansatz wird ein HMI (Human Machine Interface) zur bidirektionalen Kommunikation mit dem Steuerrechner einer Produktions-Maschine bereitgestellt, das geeignet ist, in einer explosionsgefährdeten Atmosphäre der Kategorie 2 bedient zu werden. Es wird hierdurch eine transparente Übertragung des rechnerseitig/Hostseitig erzeugten Bildschirm-Video-Signals zum benutzerseitig enthaltenen Bildschirm einerseits und der Übermittlung von Benutzereingaben andererseits an den Steuerrechner über dasselbe physische Verbindungsmedium (HDBaseT) erreicht. Als Kabel kann hier ein Ethernet-Kabel verwendet werden.

Der Aufbau entspricht einem KVM-Extender (Keyboard Video Mouse - Extender), bestehend aus einer Transmitter-Einheit und einem entfernt aufgestellten (Remote-)Bildschirm mit berührungssensitivem Bildschirm. Die Transmitter-Einheit wird im nicht explosionsgefährdeten Bereich betrieben, während der Remote-Bildschirm im explosionsgefährdeten Bereich aufgestellt wird. Beide Geräte kommunizieren über ein bis zu 100m langes, vorzugsweise exklusiv genutztes Netzwerkkabel/HDBaseT miteinander.

In der bevorzugten Ausführungsform kommt als Verbindungsstandard das HDBaseT-Verfahren in der HDBaseT-Allicance-Spezifikation 2.0 zum Einsatz. Diese beschreibt ein spezielles asymmetrisches Verfahren mit einem eigenen Datenpaketformat. Realisiert wird es mit zwei Hauptkomponenten in Form hochintegrierter Schaltkreise. Diese übernehmen die Funktionalitäten des Transmitters und des Receivers.

Die Transmitter-Einheit besteht in der bevorzugten Ausführungsform aus einer Senderelektronik für die Konvertierung des steuerrechnerseitig/Host-seitig eingespeisten Video-Signals in das HDBaseT-Signal und einer USB-Schnittstelle als Rückkanal zur Weitergabe der Benutzereingaben am Bildschirm. Der Videoeingang nimmt Signale nach dem HDMI-Standard entgegen. Ein integrierter Videosignalsplitter (HDMI-Splitter) verteilt das Eingangssignal sowohl an den HDBaseT-Sender-IC, als auch an eine zusätzliche HDMI-Ausgangsbuchse. Hierüber ist der Anschluss eines parallelen Kontrollmonitors möglich. Weiterhin sind eine Stromversorgung und Filter-/Schutzschaltungen gegen temporäre und dauerhafte Störungen der Eingangsspannung enthalten. Alle Funktionalitäten sind auf einer Trägerplatine, der sog. TX-Karte (Transmitter-Karte) vereint.

In der bevorzugten Ausführungsform besitzt die Transmitter-Einheit ein Aluminiumprofilgehäuse mit Front- und Rückwänden aus Edelstahl und erfüllt die Anforderungen an die IP-Schutzart IP20. Andere Materialien sind denkbar. Ausgelegt ist die Transmitter-Einheit für eine Betriebsspannung von vorzugsweise 24VDC +/-10% und besitzt hinter ihrem Betriebsspannungsanschluss einen eingebauten Verpolungs- und Überspannungsschutz. Diese Betriebsspannung ist im industriellen Umfeld weit verbreitet. Alternativ ist der Spannungsbereich auch verschieb- oder erweiterbar, z.B. auf 12V oder 15 - 30V. Als Signalanschlüsse stellt sie eingangsseitig je einen HDMI-Eingang und einen HDMI-Ausgang zur Verfügung. Über den HDMI-Eingang wird das Videosignal des Steuerrechners/Hosts eingespeist, während der HDMI-Ausgang den Anschluss eines Kontrollmonitors mit gespiegeltem Bildinhalt erlaubt. Ein USB-Device-Anschluss dient zur Verbindung mit dem USB-Host-Anschluss des Steuerrechners und überträgt die Informationen des berührungssensitiven Bildschirms (Touch-Screen) der Anzeigeeinheit. In Richtung der Anzeigeeinheit besitzt sie eine Netzwerkbuchse im RJ45-Format, die zum Anschluss eines bis zu 100m langen exklusiv genutzten Netzwerkkabels nach vorzugsweise CAT6A-Standard vorgesehen ist.

Die Anzeigeeinheit umfasst entsprechende elektronische Komponenten mit Bildsignalkonverter und vorzugsweise mit Skalierungseinheit für die Verarbeitung des Videosignals zum Bildschirm.

Die Skalierungseinheit dient zur Umwandlung häufig kleinerer Quellenbildauflösung in die physische Auflösung des eingebauten Bildschirms/Flachbildschirms (Upscaling) und vorzugsweise der Erzeugung von Meldungen bei fehlendem Quellensignal. Für die Aufnahme der Benutzereingaben über den berührungsempfindlichen Bildschirm ist eine Auswerteschaltung (Touch-Controller) als Modul aufgebracht, deren Signale, vorzugsweise, via USB-Schnittstelle in den transparenten USB-Rückkanal der HDBaseT-Verbindung zur Transmitter-Einheit übertragen werden.

Weiterhin umfassen die Anzeigeeinheit elektronische Komponenten für die Stromversorgung und Schutzschaltungen zur Eigenüberwachung des bestimmungsmäßigen Betriebszustands. Verschiedene Schutzeinrichtungen überwachen die Höhe der externen und internen Versorgungsspannungen, die Stromaufnahme einzelner Baugruppen, und/oder die Temperaturen von vorzugsweise wichtigen Leistungshalbleiter und sorgen im Fehlerfall durch (vorzugsweise irreversible) Unterbrechung der internen Stromversorgung für einen sicheren explosionsgeschützten Zustand. Eine integrierte Diagnoseanzeige erlaubt die visuelle Bestimmung der wesentlichen aktiven Betriebszustände hinsichtlich der Stromversorgung, HDBaseT-Link und/oder Videosignalübertragung.

Alle elektronischen Komponenten sind vorzugsweise auf einer einzigen Trägerplatine, der sog. RX-Karte (Receiver-Karte) vereint. Diese Trägerplatine ist vorzugsweise in einer Vergussmasse angeordnet. Es ist auch denkbar, dass die Platine im Sand angeordnet ist.

In einer bevorzugten Ausführungsform weist die Anzeigeeinheit einen Rahmen auf, in dem die elektronischen Komponenten/Trägerplatine angeordnet sind, wobei dieser Rahmen mit einem Vergussmaterial ausgegossen ist, so dass die elektronischen Komponenten vorzugsweise 3 mm überdeckt sind, und wobei das Vergussmaterial vorzugsweise ein oder mehrere der folgenden Eigenschaften aufweist:
Vorzugsweise ein Additionsvernetzender Zweikomponenten-Siliconkautschuk mit hoher Vulkanisationshärte von 55 Shore A (+/-10) vorzugsweise einer Temperaturbeständigkeit von -50 - +180°C (+/-40), vorzugsweise einer Wärmeleitfähigkeit von 0,55W(m*K) (+/-0,2) vorzugsweise schwer brennbar gem. UL 94-HB vorzugsweise einer Kriechstromfestigkeit CTI > 600 und vorzugsweise einer Durchschlagfestigkeit von 23kV/mm (+/- 8 kv/mm) .

Die Anzeigeeinheit ist vorzugsweise so ausgebildet, dass sie zugelassen ist für den Betrieb im explosionsgefährdeten Bereich der Kategorie 2 gem. ATEX-RL 2014/34/EU und erfüllt die Anforderungen für Geräte der Gruppe II, EPL "b" gem. EN IEC 60079-0 mit Geräteschutz durch erhöhte Sicherheit "eb" gem. EN IEC 60079-7 in Kombination mit Vergusskapselung "mb" gem. EN IEC 60079-18. Eingesetzt werden soll sie in einem Umgebungstemperaturbereich von 0 - +40°C.

Für den Einsatz im industriellen Bereich ist der Rahmen vorzugsweise aus Edelstahl (Chromstahl) und ist rückseitig mit einer Aluminiumplatte als Rückseitendeckel verschlossen. Diese dient vorzugsweise gleichzeitig als thermische Abstrahlfläche für die geräteintern erzeugte Verlustleistung.

Der Bildschirm hat vorzugsweise eine Diagonale von 15,6" und eine Bildauflösung von 1920 x 1080 Pixeln mit einer Farbtiefe von 16,9 Mio. darstellbaren Farben. Andere Konfigurationen sind denkbar. Der Bildschirm ist vorzugsweise so ausgeführt, dass er weniger als 10 cm3 Luft in seinen Zwischenräumen aufweist, vorzugsweise 4 cm3 und weniger. Benutzereingaben werden über den berührungssensitiven/Touch Bildschirm, der mittels eines Touchsensors in projiziert kapazitiver Technologie (PCT) realisiert wird, ausgewertet und über den transparenten USB-Bus vorzugsweise im HDBaseT-Datenstrom an den Steuerrechner übermittelt. Als Videoauflösungen werden vorzugsweise Größen von 640 x 480 bis zu 1920 x 1080 Pixel unterstützt.

Die integrierte Skaliereinheit zieht diese Auflösung auf die maximale Ausnutzung der verfügbaren Bildschirmfläche auf.

Die Frontseite des Bildschirms bildet eine durchgehende Sicherheits-Glasscheibe, die vorzugsweise chemisch gehärtet wurde, deren Ränder vom Gehäuserahmen als Schlagschutz umfasst werden. Die Anzeigeeinheit ist zum Fernhalten einer explosionsgefährdeten Atmosphäre mit einer Vergussmasse ausgefüllt, die alle elektrischen Komponenten mindestens 3mm überdeckt.

In einer möglichen Ausführungsform umgibt der Rahmen den Bildschirm und erstreckt sich nach hinten an der Rückseite des Bildschirms. Hierdurch entsteht ein Raum hinter dem Bildschirm, in dem sich die Platine befindet. Um die Platine mittig in dem Raum zu halten, damit die Platine umgossen werden kann, ist mindestens ein Träger vorgesehen. Der Träger erstreckt sich von einer Seite des Rahmens zu einer vorzugsweise gegenüberliegenden anderen Seite des Rahmens auf der Rückseite des Bildschirms. Der Träger ist so angeordnet, dass die elektronischen Komponenten auf der Platine hängend innerhalb des Rahmens befestig sind. In einer bevorzugten Ausführungsform sind es zwei Träger, die parallel zueinander mit Abstand verlaufen.

In einer bevorzugten Ausführungsform ist der Träger mit Abstand zum Bildschirm und zum Rückseitendeckel am Rahmen befestigt, so dass dieser vom Vergussmaterial von unten und oben umgeben ist.

In einer bevorzugten Ausführungsform weist der Rahmen sich nach innen erstreckende Auflageflächen auf, so dass eine Sicherheitsglasscheibe und/oder ein Rückseitendeckel in den Rahmen vorzugsweise bündig einlassbar sind und auf den Auflageflächen aufliegen bzw. dort festgeklebt werden. Vorzugsweise werden diese durch einen Acrylat-Kleber in Bandform eingeklebt, dieser ist hochelastisch und alterungsbeständig.

In einer möglichen Ausführungsform besteht der Rahmen aus einem äußeren Rahmen und einem inneren Rahmen, die aneinander anliegen. Der äußere Rahmen ist ein Flachmaterial was entsprechend vier Ecken aufweist. Der innere Rahmen weist einen U-förmigen Querschnitt auf, dessen Schenkel sich ins Innere des Rahmens erstrecken und als Auflageflächen dienen. Der innere Rahmen ist in der Höhe etwas geringer als der äußere Rahmen, so dass die Auflageflächen etwas tiefer liegen, wodurch die Sicherheitsglasscheibe und/oder der Rückseitendeckel bündig zum Außenrahmen anliegen. Hierdurch werden Beschädigungen der Sicherheitsglasscheibe verhindert.

In einer möglichen Ausführungsform befindet sich an der Rückseite eine integrierte Kabelanschlussbox in Form eines Kamins mit vorzugsweise zwei verschraubbaren

Kabeldurchführungen. Diese sind so ausgebildet, dass sie die Anforderungen für die Schutzart IP54 erfüllen. Die Erfindung ist vorzugsweise für eine Betriebsspannung von 24VDC +/-20% ausgelegt und besitzt dazu eine 2-polige Klemmleiste mit Schnellverschluss. Andere Spannungen sind denkbar. Als Signaleingang besitzt die Erfindung einen HDBaseT-Anschluss in Form einer 8-poligen Klemmleiste/Anschlussklemmen mit Schnellverschluss. Beide Anschlüsse sitzen in der gekapselten Anschlussbox, die für die Installation und den Service mit einem abnehmbaren Verschlussdeckel versehen ist.

Im abgenommenen Zustand sind darin 3 unterschiedlich farbige Statusanzeige-LEDs (z.B. rot, gelb, grün) mittels eines aus dem Vergussmaterial herausgeführten Lichtleiters sichtbar. Die Status LEDs können aber auch an anderer Stelle herausgeführt werden.

In einer möglichen Ausführungsform ist der Kamin mit seiner einen Seite in das Vergussmaterial eingetaucht und bildet somit einen dichten Abschluss zum Vergussmaterial. Auf seiner anderen Seite weist er den Verschlussdeckel auf.

Vorzugsweise liegt der Kamin auf den/dem Träger(n) auf und ist mit diesen verbunden bzw. verschweißt und ist mit dem Vergussmaterial umgeben.

Vorzugsweise befinden sich zusätzlich auf den Trägern Gewindebolzen, die sich parallel außerhalb des Kamins in Richtung Verschlussdeckel erstrecken, um diesen zu halten. Der Verschlussdeckel ist mit den Gewindebolzen verschraubt und schließt hierdurch dicht den Kamin ab.

In einer bevorzugten Ausführungsform sind innerhalb des Kamins Kammern ausgebildet, die die Anschlussklemmen des Stromversorgungskabels und die Anschlussklemmen für das Netzwerkkabel jeweils aufnehmen, so dass eine gegenseitige Abschirmung erfolgt. Die Wände des Kamins sind vorzugsweise aus Metallblech gefertigt. Die Kammern und deren Wände werden ebenfalls durch Blechwände ausgebildet, die innerhalb des Kamins angeordnet sind und mit den Wänden des Kamins in Verbindung stehen. Durch überlappende Laschen stehen diese mit den Wänden des Kamins in Kontakt.

In einer weiteren möglichen Ausführungsform ist für den sicheren Betrieb ein Erdungsanschluss über einen Gewindebolzen vorgesehen.

In einer bevorzugten Ausführungsform sind die elektronischen Komponenten auf einer Platine angeordnet, die vom Vergussmaterial umgeben ist. Hierbei sind die elektronischen Komponenten gespreizt angeordnet, so dass eine als Grenzwert für die maximal auftretende Temperatur der heißesten Bauteile im Geräteinnern vorgegebene Temperatur von +65°C an keiner Stelle überschritten wird und gleichzeitig eine maximale Oberflächentemperatur von +55°C an der als Wärmeabstrahlfläche ausgebildeten Gehäuserückwand/Rück eingehalten wird. Wobei die Spreizung erreicht wird,
- indem die elektronischen Komponenten auf der Platine je nach Wärmeabgabe einen definierten Abstand aufweisen, der verhindert, dass die Temperaturen über einen bestimmten Wert im Außenbereich steigen und/oder
- indem Funktionen, auf mehrere Komponenten verteilt werden, und/oder
- indem Wärmetransfermaterialien eingesetzt werden, die mit den elektronischen Komponenten in Verbindung stehen und sich durch das Vergussmaterial zur Außenseite erstrecken, um die Wärme dort abzugeben.

Für die Messung an der Außenseite wird die vorgegebene Temperatur wie folgt bestimmt: Gemessene Oberflächentemperatur an der heißesten Stelle bei parallel gemessener Umgebungstemperatur + Differenz zwischen der Umgebungstemperatur und der maximal erlaubten Betriebstemperatur von +40°C. Analog gilt diese Methode für die Bestimmung der Bauteiltemperaturen, hier jedoch bezogen auf eine Betriebstemperatur von +65°Celsius.

In einer bevorzugten Ausführungsform weisen die elektronischen Komponenten einen Kühlköper auf, vorzugsweise aus Aluminium oder Kupfer, mit dem sie in Kontakt stehen. Der eingegossene Kühlkörper erstreckt sich durch das Vergussmaterial hindurch zur Außenseite der Anzeigeeinheit, um die Wärme nach außen abzugeben. Vorzugsweise liegt er an der Rückseite des Rückseitendeckels an, so dass der Rückseitendeckel, der vorzugsweise aus einem wärmeleitenden Material wie Aluminium oder Kupfer gefertigt ist, die Wärme großflächig verteilt. Der Deckel selber kann auch noch zusätzlich Kühlrippen aufweisen.

Vorzugsweise sind zur Vermeidung von Gefahren eine oder mehrere thermische, elektronische und Schmelz-Sicherungen zur Überwachung der elektronischen Komponenten vorhanden, wobei die Sicherungen vorgegebene Grenz-Temperaturen von +115°C und/oder gruppenweise Stromflüsse auf einer zwischengelagerten internen 12V-Versorgungsebene in einem Bereich von 0,5 bis 3,15A für eine oder mehrere elektronische Komponenten überwachen, um im Falle der Überschreitung der vorgegebenen Temperaturen und/oder des Stromflusses die Stromversorgung zu unterbrechen. Zu den überwachten Komponenten gehören der Regler für die 12V-Zwischenebene und dessen nachgeschaltete Spannungsregler für weitere, daraus abgeleitete interne Versorgungsspannungen von 1,0 bis 9,4V. Weiterhin werden interne Spannungen von 1,8 bis 3,3V auf eine fehlerbedingte Überschreitung ihres Sollwerts überwacht und im Fehlerfall über eine sog. Crowbar-(Brecheisen-)Schaltung ein Kurzschluss der 12V-Spennung erzwungen. Dieser führt zum Durchbrennen der zugehörigen Schmelzsicherung und setzt alle Schaltungsteile in einen sicheren spannungsfreien irreversiblen Zustand. Durch diese Maßnahmen wird sichergestellt, dass im Fehlerfall elektronische Leistungskomponenten deren Oberflächentemperaturen deutlich unterhalb der zulässigen maximalen Betriebstemperatur der Vergussmasse von +180°C verbleiben und so deren strukturelle Integrität gewahrt bleibt.

Ein thermisch stabiler Betrieb wird durch die thermische Kopplung aller mit höherer Verlustleistung behafteten integrierten Schaltungen (Receiver-IC, Scaler-IC) und der Komponenten des Zwischenkreis-Spannungswandlers an den Deckel aus Aluminium über Wärmetransfermaterialien (Heat Spreader) erreicht. Zusätzlich werden alle ausfallgefährdeten integrierten Schaltungen mittels thermischer Sicherungen in deren Versorgungsleitungen vor unkontrolliertem Leistungsumsatz geschützt. Elektronische Sicherungen in den einzelnen Versorgungsspannungen überwachen die Stromaufnahme der versorgten Schaltungsteile und unterbrechen im Fehlerfall deren Versorgung. Weiterhin sind vorzugsweise alle relevanten Bauteile auf einen Teillastbetrieb mit maximal 2/3 ihrer Nennleistung ausgelegt.

Das Design der Anzeigeeinheit als reines E/A-Gerät ohne integrierte Rechnerfunktionalität sichert eine geringe Verlustleistung und damit geringe thermische Belastung der eingesetzten Elektronikkomponenten; beides wirkt sich positiv auf deren Zuverlässigkeit und Lebensdauer aus. Im Gegensatz zu bisherigen HMI-Gerätelösungen zeichnet die Erfindung sich durch ein schlankes, auf ein minimales Bauvolumen hin reduziertes Design aus. Sie erfordert kein zusätzliches Umgehäuse oder ergänzende mechanische Schutzvorkehrungen für ihre Installation und den Betrieb an der zu bedienenden Maschine.

### Figurenbeschreibung:

Im Folgenden werden die Figuren kurz beschrieben
- Fig. 1: zeigt eine Schematische Darstellung der Umgebung mit der Anzeigeeinheit im EX-Bereich und der Transmitter-Einheit im nicht EX-Bereich. Beide Einheiten sind gleichzeitig im schematischen Aufbau dargestellt.
- Fig. 2a,b: zeigen die Anzeigeeinheit von vorne und von der Seite;
- Fig. 3: zeigt die Anzeigeeinheit perspektivisch von hinten;
- Fig. 4: zeigt den Kamin von oben mit geöffnetem Deckel;
- Fig. 5: zeigt die Anzeigeeinheit von hinten ohne Vergussmaterial und ohne Rückseitendeckel;
- Fig. 6: zeigt die Anzeigeeinheit im Schnitt;
- Fig. 7a,b: zeigt die Transceivereinheit perspektivisch von oben und unten. Die Oberansicht mit aufgeschnittenem Gehäuse(Deckel) zur Einsicht in den Innenaufbau.

### Beschreibung der Ausführungsform

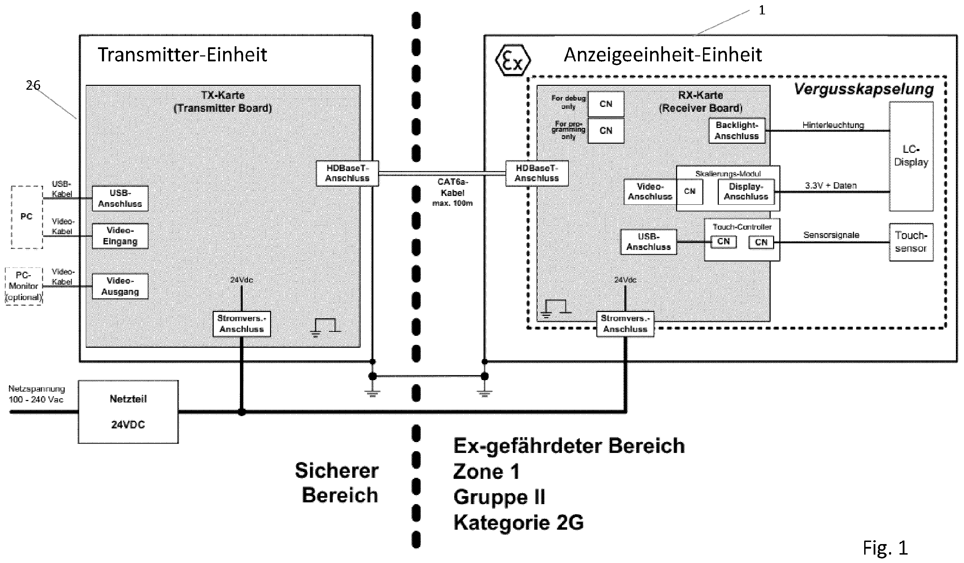

Figur 1 zeigt die schematische Anordnung der Komponenten der Erfindung. Ein Host-Computer ist mit der Transmitter-Einheit im Nicht-EX-Bereich verbunden. Die Verbindung erfolgt z.B. über einen HDMI Anschluss. Zusätzlich kann ein weiterer HDMI Anschluss vorgesehen sein, um einen Monitor im Nicht-EX-Bereich anzuschließen, der die gleichen Informationen anzeigt, wie der Bildschirm im EX-Bereich. Der Host-Computer kann auch eine SPS sein oder eine Virtuelle SPS oder ein Rechner, der eine virtuelle HMI für eine SPS bereitstellt. Dieser Rechner kann z.B. WINcc emulieren, so dass für eine SPS das Gesamtsystem wie ein Standard HMI erscheint. Normalerweise werden die HMIs im Industriebereich über ein Netzwerk angesprochen. Bei der vorliegenden Erfindung wird der Host-Computer über das Netzwerk von einer SPS angesprochen, oder falls die SPS im Host-Computer emuliert wird, dann direkt im Host-Computer. Zwischen der Transmitter-Einheit und der Anzeigeeinheit ist eine Wand dargestellt, die den EX-Bereich vom Nicht-EX-Bereich abtrennt. Im EX-Bereich ist die Anzeigeeinheit in der Regel neben einer Maschine angeordnet, die über die Anzeigeeinheit und die Touch-Einheit 22 überwacht und gesteuert wird.

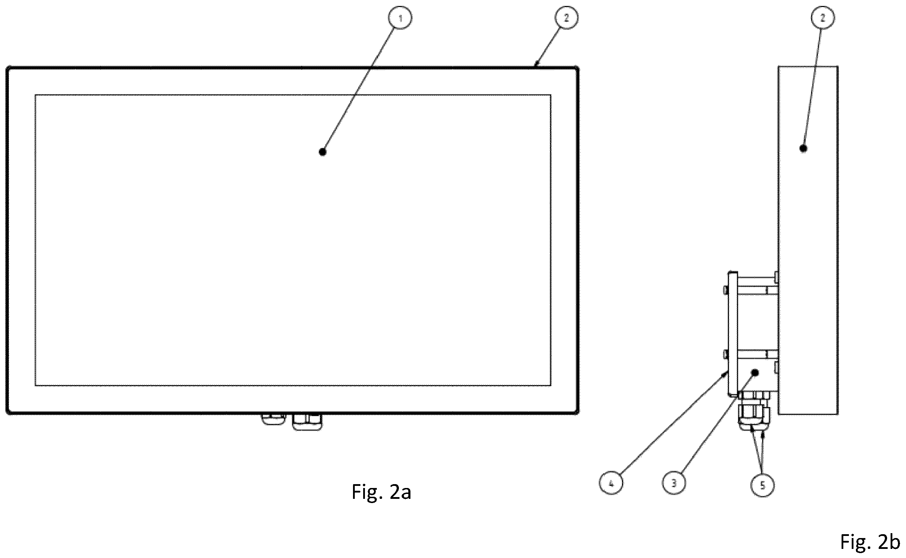

Figuren 2a und 2b zeigen die Anzeigeeinheit 1 von vorne und der Seite. Die Anzeigeeinheit 1 weist einen Gehäuserahmen 2 auf. Auf der Vorderseite ist ein Bildschirm 15 angeordnet, der durch eine Glasscheibe geschützt wird. Auf der Rückseite ist ein Kamin 3 mit der Funktion als Anschlussbox vorgesehen. Der Kamin 3 wird durch einen Metalldeckel 4 abgedeckt. Der Deckel 4 ist mit einer Dichtung 12 auf dem Kamin 3 angebracht, so dass das Innere des Kamins abgedichtet ist. An der Unterseite des Kamins sind Kabelverschraubungen 5 vorgesehen, die einerseits für die Stromversorgung und andererseits für die HDBaseT-verbindung dienen. Es sind seitlich außerhalb des Kamins Gewindebolzen vorgesehen, die dazu dienen, den Deckel fest auf den Kamin zu schrauben.

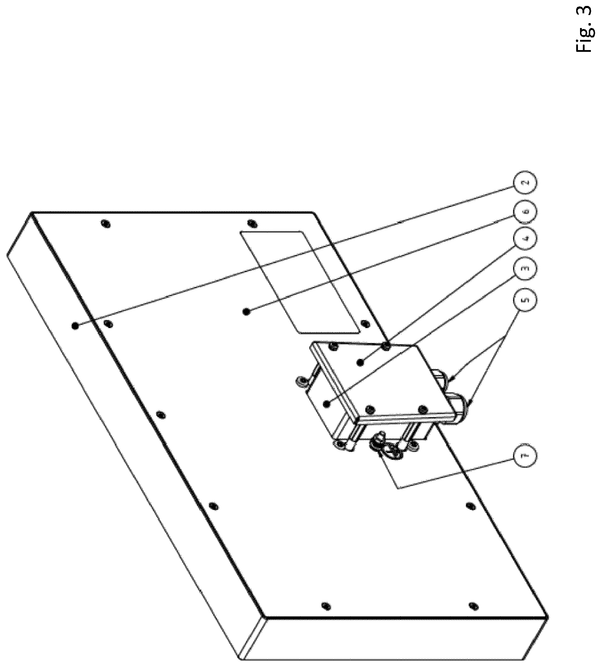

Fig. 3 zeigt die Anzeigeeinheit 1 von hinten mit der Anschluss-Box/Kamin 3 und den Gewindebolzen 17 die den Kamin 3 umgeben. Die Gewindebolzen 17 halten den Metalldeckel 4 des Kamins 4. Die Rückwand bzw. der Deckel der Anzeigeeinheit 6 ist bündig in den Gehäuserahmen 2 geschraubt.

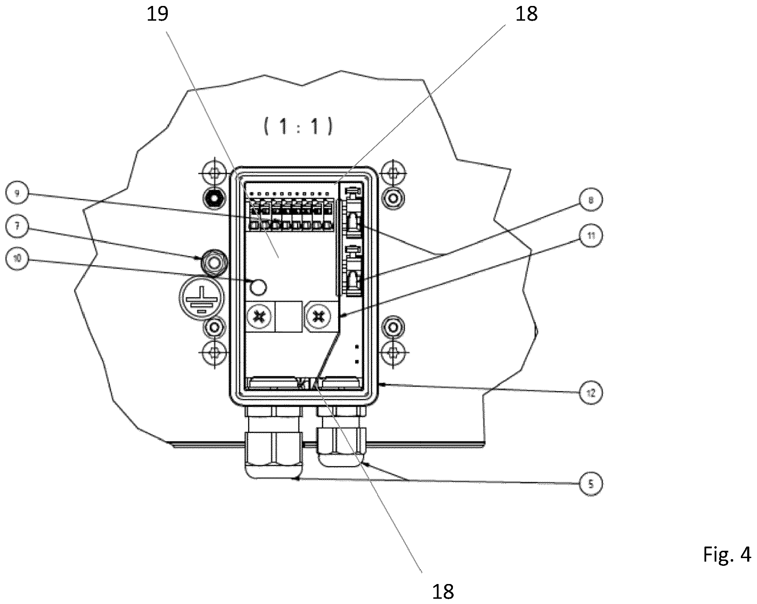

Die Fig. 4 zeigt den Kamin von oben mit geöffnetem Deckel. Auf der Rückwand 6 ist der Erdungsanschluss 7 in Form einer Verschraubung zu finden.

Innerhalb des Kamins finden sich die Anschlussklemme 8 für die Spannungsversorgung und die Anschlussklemme 9 für das HDBaseT-Kabel. Zusätzlich kann man die Lichtleiter 10 erkennen, die durch das Vergussmaterial geführt sind. Eine Elastomer-Dichtung liegt auf dem Rand des Kamins auf, um eine Abdichtung mit dem Deckel zu erreichen. Zusätzlich sieht man die Gewindebolzen 17 von oben. Für den Einsatz im industriellen Umfeld ist mit erheblichen Störbeeinflussungen auf die Gleichspannungs-Stromversorgung durch Schaltvorgänge an anderen im selben Netz betriebenen Verbrauchern zu rechnen. Normalerweise wird diesem Störeinfluss durch die Einhaltung der entsprechenden normativen Anforderungen für die elektromagnetische Verträglichkeit (EMV) Rechnung getragen. Dennoch kann es zu Störeinkopplungen in benachbarte oder parallel verlaufende Signalleitungen und Netzwerkkabel (LAN/LON) kommen. Bei Netzwerkübertragungen werden durch Störbeeinflussung als fehlerhaft erkannte Datenpakete, die nicht von der grundsätzlichen Bitfehlerkorrektur korrigierbar sind, vom Empfänger erneut angefordert (Re-Transmission). Beim HDBaseT-Übertragungsverfahren ist dieses Verfahren wegen der Echtzeitforderung an das übertragene Videosignal nicht möglich. Zur Vermeidung von elektromagnetische Feldkopplungen zwischen der störbehafteten Versorgungsspannungsleitung in Form überlagerter Gleichtaktstörungen, die sich sogar bei Einsatz geschirmter Leitungen über deren Schirm ausbreiteten, werden eine Schirmwand 13 und eine Abschirmwand 11 eingesetzt.

Es erfolgt somit vorzugsweise eine Kombination aus Schirmung und/oder Filterung der Versorgungsspannung bevor sie in den Elektronikbereich der Anzeigeeinheit eintritt. Realisiert wird dies durch die Formgebung der Anschlussbox als metallischer Kamin mit einer senkrechten Unterteilung durch eine vorzugsweise entnehmbare Abschirmwand 11. Diese trennt den Signalbereich physisch vom Stromversorgungsbereich ab und ist über Kontaktzungen 18 mit der Stirn - und Rückwand des Kamins verbunden. Diese Kontaktzungen 18 drücken sich klemmend an die Seitenwände. Horizontal wird der Kamin durch eine zum Anschluss der Leitungen, auf einem die Querrichtung ausfüllenden metallischen U-Profil befestigten, hochgelagerten mehrlagigen Platine 19 oberhalb des Vergussniveaus ebenfalls getrennt. Diese separiert die Signal- und die Stromversorgungsleitungen horizontal in zwei Bereiche, einem hinteren und einem vorderen Bereich. Im hinteren Bereich (hinter dem U-Profil), in dem die Signalleitungen nach unten auf die Hauptplatine (RX-Karte) geführt werden und in einen vorderen Bereich (vor dem U-Profil), in dem die Stromversorgungsleitungen zu einer unmittelbar darunterliegenden Filterschaltung, bestehend aus einer Gleichtaktdrossel für die Hin- und Rückleiter und Ableitkondensatoren (Y-Kondensatoren) für die Ableitung von Störspannungen gegen die Chassis-Masse und damit zum Erdungsanschluss des Gehäuses.

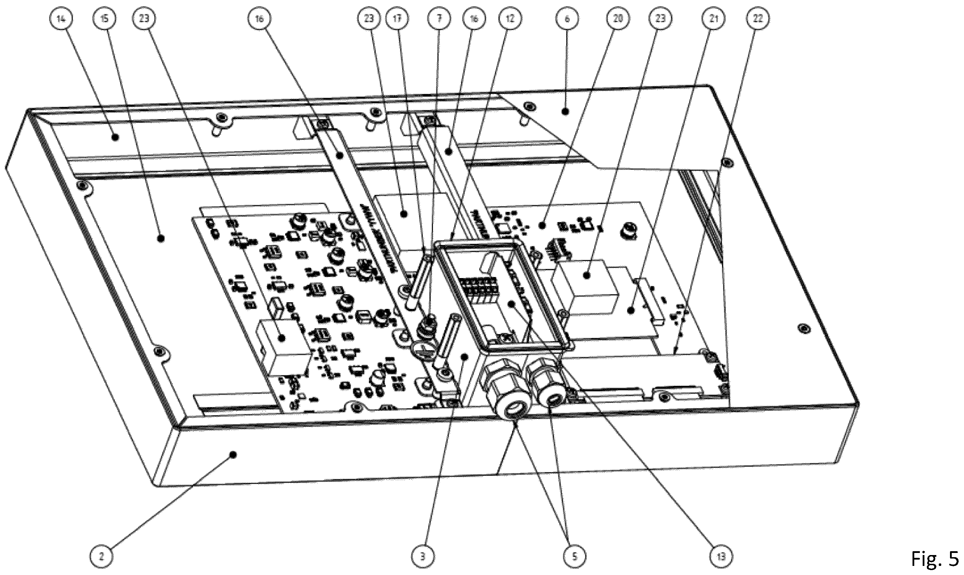

Die Fig. 5 zeigt das innere der Anzeigeeinheit ohne Vergussmaterial und ohne Deckel auf der Rückseite. Durch die dargestellte Konstruktion wird die Anforderungen an den Explosionsschutz (Kategorie 2) bei einer gleichzeitig kosteneffizient zu fertigenden und montierbaren, ästhetisch durch ein schlankes Design hervorstechenden mechanischen Gestaltung erreicht. Hierzu wird ein mit minimaler Bautiefe zur Umschließung der elektronischen Komponenten reduzierter Metallrahmen 2 mit einem darin umlaufenden U-profilierten inneren Trägerrahmen 14 verwendet. Der innere Rahmen ist deutlich geringer in der Breite ausgebildet, so dass der äußere Rahmen hervorsteht. Der äußere Rahmen und der innere Rahmen können verschweißt oder verklebt sein. Es ist auch denkbar den Rahmen als einstückiges Profil herzustellen. Der innere Rahmen bildet frontseitig die Auflage und Klebefläche für die Frontglasscheibe 24 der Anzeigeeinheit. Vorzugsweise wird rückseitig die Auflage- und Verschraubungsfläche für die Metallrückwand/Deckel 6 gebildet.

Ferner erstrecken sich zwischen zwei gegenüberliegenden Seiten des Rahmens vorzugsweise zwei Träger 16 (kann auch als ein breiter Träger oder mehrere Träger ausgebildet sein). Somit dient der Rahmen rückseitig als Träger für zwei Trägerstreben 16 in Verbindung mit dem Kamin 3 der Anschluss-box. Der Kamin ist ebenfalls auf den Trägern befestigt. Die Träger sind so tief im Rahmen angeordnet, dass sie durch das Vergussmaterial abgedeckt werden. Zusätzlich tragen die Träger eine zentrale Elektronik-Platine (RX-Karte) 20 auf der vorzugsweise alle elektronischen Komponenten der Anzeigeeinheit zusammengefasst sind. Die Platine hängt somit durch Verschraubungen an den Trägern. Die Anschlussbox besteht aus einem gebogenen Metallrahmen mit Durchbrüchen für die Anschlussleitungen und ist zwischen und/oder auf den zuvor erwähnten Trägerstreben gelagert. Die Abdichtung nach unten ergibt sich durch ihr Eintauchen in das Vergussmaterial beim Vergießen und nach oben durch den Metalldeckel 4. Dieser ist vorzugsweise ausgeführt als umlaufend seitlich abgekantetes Blechteil, dass mit 4 Schrauben außerhalb des Kaminbereichs auf den Gewindebolzen 17, die wiederum auf den Trägerstreben verankert sind, befestigt wird. Eine dazwischen gelagerte Elastomerdichtung 12 stellt die Einhaltung der IP54-Forderung sicher. Hierdurch ergibt sich ein modularer Aufbau aus wenigen Grundbaugruppen, die alle in klassischen Metallblechverarbeitungsverfahren durch Schneiden, Biegen und Abkanten herstellbar sind. In Verbindung mit der Vergusskapselung durch Ausgießen des auf der Frontseite liegenden montiertem Geräts ergibt sich ein auch für kleinere und mittlere Serien wirtschaftlich darstellbarer kosteneffizienter Fertigungsprozess. Kostenaufwendige Metall-Spritzgussformen, wie sie bei anderen Arten des Explosionsschutzkonzepts (z.B. Druckkapselung oder Sandkapselung) erforderlich werden, entfallen hier.

Für die Einhaltung des Explosionsschutzes ist es erforderlich, Temperaturen die zur Entzündung einer umgebenden explosionsgefährdeten Atmosphäre führen könnten, sicher zu vermeiden. Die einschlägigen ATEX-Normen DIN EN IEC 60079-0 mit Bezug zur Richtlinie ATEX RL 2014/34/EU gibt mit der hier vorgesehenen Temperaturklasse T4 (bis +135°C) einen Grenzwert an, der in keiner Betriebssituation, sowohl im Normalbetrieb, als auch im Fehlerfall überschritten werden darf. Weiterhin wirken sich niedrige Bauteiltemperaturen positiv auf die Zuverlässigkeit und Lebensdauer der Komponenten aus. Realisiert werden diese Forderungen durch ein Wärmemanagement und Spreizung der vorzugsweise besonders verlustbehafteten Leistungsbauteile. Dazu gehören in der Stromversorgung die eingesetzten Schaltregler (Tiefsetzsteller, Buck-Konverter) und die hochintegrierten Schaltungen zur Signalverarbeitung (HDBaseT-Receiver-IC. Scaler-IC). Beide hochintegrierten Schaltungen sind über Heatspreader in Form von massiven Wärmetransferblöcken 23 aus Aluminium an die Geräterückwand 6, die ebenfalls aus Aluminium besteht, angebunden. Andere Materialien mit hoher Leitfähigkeit sind hier ebenfalls denkbar. Zusätzlich können die Leistungshalbleiter und eine Speicherdrossel des 12V-Zwischenkreises über ein stufenförmig gestalteten Aluminiumprofilblock 23 an die Geräterückwand gekoppelt werden. Der Profilblock kann zur Außenseite konisch verlaufen, bzw. die Kontaktfläche zum Bauteil ist in der Regel kleiner als zur Rückwand. L-förmige Profilblöcke sind möglich, wie der Figur zu entnehmen ist. Zum Schutz vor Fehlersituationen durch Bauteilausfälle (z.B. interner Kurzschluss) mit der Folge erhöhter bzw. unkontrollierter Wärmefreisetzung sind alle potenziell gefährdeten Schaltungsteile durch elektronische Sicherungen in Reihenschaltung mit deren Versorgungspfaden versehen. Sollte es zu einer abnormalen Erwärmung dieser Schutzbauteile oder von integrierten Leistungs-ICs kommen, so sind diese zusätzlich durch Thermosicherungen geschützt, die in thermischer Kopplung mit ihnen stehen ihre Versorgungsspannungen unterbrechen. Forcierend trägt zur Kühlung der Elektronik auch die sie einbettende Vergussmasse bei, deren Wärmeleitvermögen um den Faktor 2 besser als das der Luft ist. Zusätzlich werden die Bauteile auf der Platine, die Wärme erzeugen möglichst weit voneinander entfernt angeordnet, oder ihre Funktion wird auf mehrere ICs aufgeteilt, die mit einem größeren Abstand angeordnet sind.

Eine optimale und bildschirmfüllende Darstellung des zugelieferten Videosignals ist normalerweise nur gegeben, wenn die Quellenauflösung der physischen Auflösung des Displays entspricht. Abweichende Auflösungen nach unten müssen im zuliefernden Steuerrechner hard- oder softwareseitig umgesetzt werden. Dies ist, insbesondere bei älteren, nicht upgrade-fähigen Systemen oftmals nicht möglich, so dass hier entweder nur eine verkleinerte Bilddarstellung mit schwarzen Rändern oder gar keine Bildwiedergabe möglich ist. Um dieses Problem zu umgehen, verfügt der Remote-Monitor über ein integriertes Hardware-Skalierungs-Modul 21 (Scaler Unit). Dieses rechnet verschiedene Bildauflösungen, die kleiner als die physische Auflösung des eingesetzten Displays (1920 x 1080 Pixel) sind auf eine formatfüllende Darstellung um und gibt sie entweder bildfüllend (bei gleichem Quellbild-Seitenverhältnis) oder vertikal bzw. horizontal füllend (bei abweichendem Seitenverhältnis) auf dem Bildschirm aus.

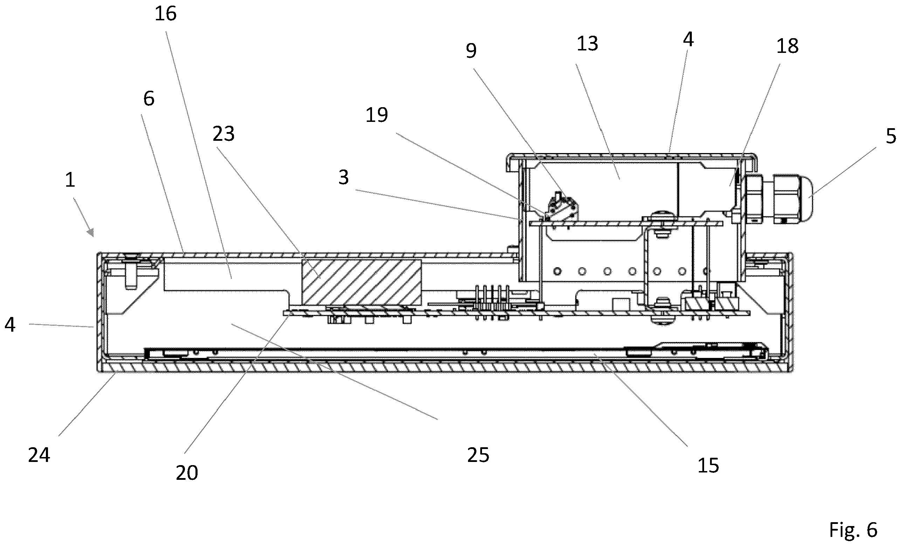

Die Figur 6 zeigt die Anzeigeeinheit 1 im Schnitt mit einem Schutzglas 24 auf der Unterseite, folgend vom Vergussmaterial 25 hoch bis zum Deckel 4. Alles wird durch den Rahmen 2 umfasst. Man erkennt hier deutlich, dass Wärmeübertragerblöcke 23 mit der Rückwand 6 in Kontakt stehen und somit die Wärme nach außen leiten. Auch ist der Träger 16 zu sehen, der sich durch die Anzeigeeinheit erstreckt und an dem die Empfängerplatine 20 aufgehängt ist.

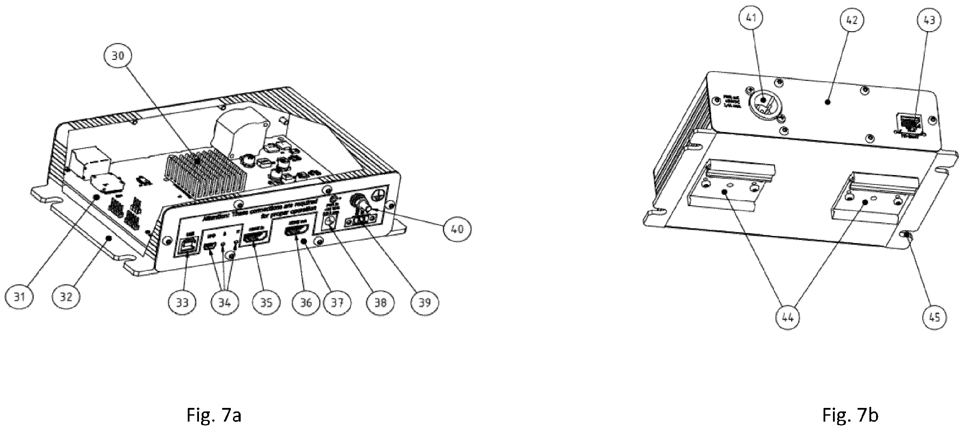

Die Figuren 7a und 7b zeigen die Transmitter -Einheit 26 mit den vorzugsweise zwei HDMI Anschlüssen (Eingang/Ausgang) dem USB-Anschluss für die Touch-Eingaben und dem Netzwerkanschluss.

Am aufgeschnittenen Deckel kann man einen Kühlkörper 30 für die HDBT-Transmitter-Komponente sehen. Dieser ist auf einer Transmitter-Platine ( TX-Karte) 31 angeordnet. Das Gehäuse 32 ist vorzugsweise aus einem Aluminiumstrangpressprofil gefertigt. Wie bereits oben ausgeführt weist das Gehäuse einen USB-Device-Anschluss 33 auf, der zu einem Host-Computer geführt wird, um die Touch-Befehle bzw. deren Koordinaten weiterzugeben. Zusätzlich können ein Wartungsanschluss 34 und Diagnoseanzeigen vorgesehen werden, um Firmware-Updates oder ähnliches aufzuspielen. Der HDMI Video-Eingang 35 dient zu Einspeisung der Bild-Signale vom Host-Computer. An den HDMI Video-Ausgang 36 kann ein (Kontrollmonitor) angeschlossen werden. Eine Gehäuse-Frontplatte 37 schließt das Aluminiumstrangpressprofil ab. Über einen Stromversorgungsanschluss 38 (DC Jack) wird die Einheit mit Spannung versorgt. Alternativ kann auch Stromversorgungsanschluss 39 der als Schraubklemme ausgebildet ist verwendet werden. Zur Absicherung ist ein Erdungsbolzen 40 vorgesehen. In einer möglichen Ausführungsform gibt es einen Gleichspannungsausgang 41 zur Speisung des Remote-Monitors (optional). Die Gehäuse-Rückwandplatte 42 ist ähnlich wie die Frontplatte 37 ausgebildet und geschraubt. Man kann dieser den HDBaseT-Anschluss 43 für die Anzeigeeinheit erkennen. Klemmblöcke 44 für eine Hutschienenmontage sind genauso (optional) wie Befestigungslaschen 45 für eine Oberflächenmontage.

### Bezugszeichenliste

1 Anzeigeeinheit
2 Gehäuserahmen
3 Kamin/ Anschlussbox
4 Metalldeckel
5 Kabelverschraubung
6 Rückwand/Deckel
7 Erdungsanschluss
8 Anschlussklemme Spannungsversorgung
9 Anschlussklemme Netzwerk HDbaseT
10 Lichtleiter
11 Abschirmwand
12 Elastomer-Dichtung
13 Schirmwand
14 innerer Gehäuserahmen
15 Bildschirm
16 Trägerstrebe
17 Sechskantbolzen/ Gewindebolzen für Verschlussdeckel
18 Kontaktzunge
19 Platine Kamin
20 Empfängerplatine (RX-Karte)
21 Skalierungsmodul/Skalierungseinheit (Scaler)
22 Touch Einheit
23 Wärmeübertragerblöcke (Heatspreader) )
24 Schutzglas
25 Vergussmaterial
26 Transmitter-Einheit
30 Kühlkörper für HDBT-Transmitter-IC
31 Transmitter-Platine ( TX-Karte)
32 Gehäuse aus Aluminiumstrangpressprofil
33 USB-Device-Anschluss
34 Wartungsanschluss und Diagnoseanzeigen
35 HDMI Video-Eingang
36 HDMI Video-Ausgang (Kontrollmonitor)
37 Gehäuse-Frontplatte
38 Stromversorgungsanschluss (DC Jack)
39 Stromversorgungsanschluss (Schraubklemme)
40 Erdungsbolzen
41 Gleichspannungsausgang zur Speisung des Remote-Monitors (optional)
42 Gehäuse-Rückwandplatte
43 HDBaseT-Anschluss für Remote-Monitor (Ausgang)
44 Klemmblöcke für Hutschienenmontage (optional)
45 Befestigungslaschen für Oberflächenmontage

## Patentansprüche

1. Explosionsgeschütztes Anzeige- und Eingabesystem ausgebildet zum Betrieb in einer explosionsgefährdeten Atmosphäre der Kategorie 2;
umfassend eine Anzeigeeinheit (1) mit einem Bildschirm, der eine Touch-Oberfläche (22) zur Eingabe von Befehlen aufweist, weiter umfassend eine erste HDBaseT-Schnittstelle (9) und elektronische Komponenten (20,21), die den Bildschirm und die HDBaseT-Schnittstelle (9) kontrollieren, die Anzeigeeinheit (1) ist ausgebildet, um in einer explosionsgefährdeten Atmosphäre der Kategorie 2 aufgestellt zu werden,
**gekennzeichnet, durch**
eine entfernt im nicht explosionsgefährdeten Bereich aufstellbare Transmitter-Einheit (26), mit einer Eingangs-Videoschnittstelle (35), einer zweiten HDBaseT-Schnittstelle (43) und einer USB-Schnittstelle (33), und die Transmitter-Einheit ist ausgebildet, um Bildschirm-Videosignale, die von einem Hostrechner einspeisbar sind, in Signale umzuwandeln, die über die zweite HDBaseT-Schnittelle und über ein Netzwerk an die erste HDBaseT-Schnittstelle der Anzeigeeinheit (1) übertragbar sind, die Anzeigeeinheit (1) ist ferner ausgebildet, um mit den elektronischen Komponenten (20, 21) die empfangenen Signale in Bildschirm-Videosignale zurückumzuwandeln, um diese dann auf dem Bildschirm darzustellen, und wobei die Anzeigeeinheit ferner ausgebildet ist, um Eingaben über die Touch-Oberfläche in Eingabe-Signale umzuwandeln, die über die erste HDBaseT-Schnittstelle an die Transmitter-Einheit (26) übertragbar sind, und wobei die Transmitter-Einheit ausgebildet ist, um die Eingabe-Signale über die USB-Schnittstelle (33) an einen Hostrechner auszugeben, so dass diese als Standard-Signale für eine Touch-Oberfläche durch den Hostrechner interpretierbar sind.

2. Das explosionsgeschützte Anzeige- und Eingabesystem nach dem vorhergehenden Anspruch, **dadurch gekennzeichnet, dass** die Anzeigeeinheit (1) einen Rahmen (2) aufweist, in dem die elektronischen Komponenten (20, 21) angeordnet sind, wobei dieser Rahmen mit einem Vergussmaterial (25) ausgegossen ist, so dass die elektronischen Komponenten (20, 21) vorzugsweise 3mm überdeckt sind, und wobei das Vergussmaterial (25) vorzugsweise ein oder mehrere der folgenden Eigenschaften aufweist,
- ein additionsvernetzender Zweikomponenten-Siliconkautschuk mit hoher Vulkanisationshärte von vorzugswese 55 Shore A,
- eine Temperaturbeständigkeit von vorzugsweise -50 - +180°C,
- eine Wärmeleitfähigkeit von vorzugsweise 0,55W(m*K),
- schwer brennbar gem. UL 94-HB,
- eine Kriechstromfestigkeit CTI > 600
- eine Durchschlagfestigkeit von vorzugsweise 23kV/mm.

3. Das explosionsgeschützte Anzeige- und Eingabesystem nach dem vorhergehenden Anspruch, **dadurch gekennzeichnet, dass** der Rahmen (2) den Bildschirm umgibt und sich an der Rückseite des Bildschirms erstreckt, umfassend mindestens einen Träger (16), der sich von einer Seite des Rahmens zu einer anderen Seite des Rahmens hinter dem Bildschirm erstreckt, und an dem die elektronischen Komponenten (20,21) hängend innerhalb des Rahmens befestig sind, so dass das Vergussmaterial (25) die elektronischen Komponenten (20,21) von allen Seiten innerhalb des Rahmens umgibt.

4. Das explosionsgeschützte Anzeige- und Eingabesystem nach dem vorhergehenden Anspruch, **dadurch gekennzeichnet, dass** der Träger (16) so im Rahmen (2) angeordnet ist, dass dieser vom Vergussmaterial umgeben ist.

5. Das explosionsgeschützte Anzeige- und Eingabesystem nach einem der drei vorhergehenden Ansprüche, **dadurch gekennzeichnet, dass** der Rahmen (2) sich nach innen erstreckende Auflageflächen aufweist, so dass eine Sicherheitsglasscheibe und/oder ein Rückseitendeckel (6) in den Rahmen (2) einlassbar sind, wobei vorzugsweise der Rahmen (2) aus einem äußeren Rahmen und einem inneren Rahmen besteht, die aneinander anliegen, der äußere Rahmen ist ein Flachmaterial und der innere Rahmen weist einen U-förmigen Querschnitt auf, dessen Schenkel sich ins Innere des Rahmens erstrecken und als Auflageflächen dienen.

6. Das explosionsgeschützte Anzeige- und Eingabesystem nach dem vorhergehenden Anspruch, wobei die Sicherheitsglasscheibe (24) und/oder der Rückseitendeckel (6) bündig in den äußeren Rahmen eingelassen sind, so dass der Rahmen diese schützt.

7. Das explosionsgeschützte Anzeige- und Eingabesystem nach einem der vorhergehenden Ansprüche, wobei die elektronischen Komponenten (20, 21) auf einer Platine angeordnet sind, die vom Vergussmaterial (25) umgeben ist, und wobei die elektronischen Komponenten in einer Spreizung angeordnet sind, so dass eine vorgegebene Temperatur an einer Außenseite der Anzeigeeinheit nicht überschritten wird und vorzugweise
wobei die Spreizung erreicht wird,
- indem die elektronischen Komponenten (20, 21) auf der Platine je nach Wärmeabgabe einen definierten Abstand aufweisen und/oder
- indem Funktionen, auf mehrere Komponenten verteilt werden, und/oder
- indem Wärmetransfermaterialien (23) eingesetzt werden, die mit den elektronischen Komponenten (20, 21) in Verbindung stehen und sich durch das Vergussmaterial (24) zur Außenseite erstrecken, um die Wärme dort abzugeben.

8. Das explosionsgeschützte Anzeige- und Eingabesystem nach dem vorhergehenden Anspruch, wobei die Spreizung so ausgebildet ist, dass ein Grenzwert für die maximal auftretende Temperatur der heißesten Komponenten (20, 21) im Geräteinnern vorgegebene Temperatur von +65°C an keiner Stelle überschritten ist und gleichzeitig eine maximale Oberflächentemperatur von +55°C am Rückseitendeckel eingehalten ist.

9. Das explosionsgeschützte Anzeige- und Eingabesystem nach einem der vorhergehenden drei Ansprüche, wobei die elektronischen Komponenten (20, 21) mit einem Kühlköper (23), vorzugsweise aus Aluminium oder Kupfer in Kontakt stehen, der sich durch das Vergussmaterial (25) hindurch zur Außenseite der Anzeigeeinheit erstreckt, und vorzugsweise an der Rückseite des Rückseitendeckels (6) anliegt, so dass der Rückseitendeckel, der vorzugsweise aus einem wärmeleitenden Material wie Aluminium oder Kupfer gefertigt ist, die Wärme großflächig verteilt.

10. Das explosionsgeschützte Anzeige- und Eingabesystem nach einem der vorhergehenden Ansprüche, wobei eine oder mehrere Sicherungen zur Überwachung der elektronischen Komponenten (20, 21) vorhanden sind, wobei die Sicherungen vorgegebene Temperaturen und/oder Stromflüsse für eine oder mehrere elektronische Komponenten überwachen, um im Falle der Überschreitung der vorgegebenen Temperaturen und/oder des Stromflusses die Stromversorgung zu unterbrechen.

11. Das explosionsgeschützte Anzeige- und Eingabesystem nach einem der vorhergehenden Ansprüche, umfassend einen Kamin (3), wobei der Kamin (3) mit seiner einen Seite in das Vergussmaterial (25) eintaucht, und auf seiner anderen Seite einen Deckel (4) aufweist, der mit einer Dichtung versehen ist, wobei der Kamin ferner mindestens eine Kabeleinführung (5) umfasst, durch die das Netzwerkkabel und/oder ein Spannungsversorgungskabel in den Kamin einführbar sind, wobei innerhalb des Kamins (3) Anschlussklemmen (8,9) für das Netzwerkkabel und/oder das Spannungsversorgungskabel angeordnet sind und vorzugweise
wobei innerhalb des Kamins (3) Kammern ausgebildet sind, die die Anschlussklemmen (8) des Stromversorgungskabels und die Anschlussklemmen (9) für das Netzwerkkabel jeweils aufnehmen, so dass eine gegenseitige Abschirmung erfolgt, wobei vorzugsweise Wände (11) des Kamins aus Metallblech gefertigt sind und die Kammern durch Blechwände (11) ausgebildet sind, die im Kamin (3) angeordnet sind und mit den Wänden des Kamins in Verbindung stehen.

12. Das explosionsgeschützte Anzeige- und Eingabesystem nach einem der vorhergehenden Ansprüche, wobei optische Statusinformationen (34) von elektronischen Komponenten durch Lichtleiter aus dem Vergussmaterial herausgeleitet werden, die vorzugsweise den Status der Stromversorgung, der Kommunikation und/oder des Videosignals wiedergeben, wobei vorzugsweise die Lichtleiter im Kamin aus dem Vergussmaterial herausgeführt sind.

13. Das explosionsgeschützte Anzeige- und Eingabesystem nach einem der vorhergehenden Ansprüche, wobei die Transmitter-Einheit (26) eine Video-Ausgabeschnittstelle (36) aufweist, die eine Wiedergabe der Video-Signale an einen Kontrollmonitor erlaubt.

14. Das explosionsgeschützte Anzeige- und Eingabesystem nach einem der vorhergehenden Ansprüche, wobei die HDBaseT Schnittstelle (9)über ein Netzwerkkabel Cat5 oder besser und vorzugsweise Cat6a verbunden sind, und/oder wobei die Informationen über das Netzwerkkabel dem Verbindungsstandard HDBaseT entsprechen.

15. Das explosionsgeschützte Anzeige- und Eingabesystem nach einem der vorhergehenden Ansprüche, wobei die Anzeigeeinheit (1) eine Skalierungseinheit (21) aufweist, die automatisch die Auflösung der Videosignale anpasst, so dass die angepassten Videosignale optimal auf dem gesamten Bildschirm dargestellt werden.
